# EUROPÄISCHE PATENTSCHRIFT

(11) **EP 1 648 741 B1**
(45) Veröffentlichungstag und Bekanntmachung des Hinweises auf die Patenterteilung: **18.10.2006**
(21) Anmeldenummer: 04741333.1
(22) Anmeldetag: 30.07.2004
(51) Int. Cl.: B60R 13/02, B29C 45/14

(54) **OBERFLÄCHENDEKOR FÜR VERKLEIDUNGSTEIL UND VERFAHREN ZU DESSEN HERSTELLUNG**
SURFACE DECORATION FOR A COVERING PART AND METHOD FOR THE PRODUCTION THEREOF
DECOR DE SURFACE POUR ELEMENT DE GARNITURE ET PROCEDE DE PRODUCTION DUDIT DECOR

(30) Priorität: 31.07.2003 DE 10335433
(43) Veröffentlichungstag der Anmeldung: 26.04.2006
(73) Patentinhaber: Faurecia Innenraumsysteme GmbH, 76767 Hagenbach (DE)
(72) Erfinder: FRANZGROTE, Ralf, 58636 Iserlohn (DE)
(74) Vertreter: Pfenning, Meinig & Partner GbR
(86) Internationale Anmeldenummer: PCT/EP2004/008558
(87) Internationale Veröffentlichungsnummer: WO 2005/012040

(56) Entgegenhaltungen:
- EP-A- 0 786 380
- US-A- 5 811 053
- US-B2- 6 673 296

## Beschreibung

Die Erfindung betrifft ein Oberflächendekor für ein Verkleidungsteil, insbesondere für ein Innenverkleidungsteil für ein Kraftfahrzeug, nach dem Oberbegriff des Hauptanspruchs und ein Verfahren zur Herstellung eines Oberflächendekors und nach dem Oberbegriff des Anspruchs 15 sowie ein Gießwerkzeug zur Herstellung eines derartigen Oberflächendekors nach dem Oberbegriff des Anspruchs 28. Eine Einrichtung nach dem Oberbegriff des Anspruch 1 ist aus EP 0 786 380 bekannt.

Es ist bekannt, Gießhäute als Oberflächendekore für Verkleidungsteile zu verwenden, wobei die Gießhäute üblicherweise durch Füllen eines aus Oberwerkzeug und Unterwerkzeug bestehenden Gießwerkzeugs mit Polyurethan hergestellt werden. Ein Verkleidungsteil kann dabei nach dem Stand der Technik durch Hinterschäumen einer solchen Gießhaut, typischerweise ebenfalls mit Polyurethan, gebildet werden, wodurch die Gießhaut mit einem Träger in Verbindung gebracht wird. Derartige Verkleidungsteile, die insbesondere als Innenverkleidungsteile für Kraftfahrzeuge Verwendung finden, zeichnen sich damit durch eine aufwandsarme und preiswerte Herstellung und durch ein mit einer Gießhaut als Oberflächendekor optisch ansprechend zu gestaltendes Erscheinungsbild aus. Dabei können verschiedene Arten von Oberflächen erzeugt werden, indem die Gießhaut mit einer bestimmten Narbung und Farbe versehen wird, die Oberfläche bleibt aber geprägt durch das für die Gießhaut verwendete Material, im genannten Beispiel Polyurethan. Einer vielseitigen Gestaltung der Oberfläche an einer Sichtseite eines Verkleidungsteils mit einem gattungsgemäßen Oberflächendekor sind also nach dem Stand der Technik Grenzen gesetzt, die von Nachteil sein können, sobald höhere ästhetische Ansprüche an eine Gestaltung z.B. eines Kraftfahrzeuginnenraums gegeben sind.

Der Erfindung liegt also die Aufgabe zugrunde, ein Oberflächendekor sowie ein entsprechendes Herstellungsverfahren zu entwickeln, wobei einerseits das Oberflächendekor eine gegenüber dem Stand der Technik flexiblere und höheren ästhetischen Ansprüchen genügende, edlere Materialien nicht ausschließende Oberflächengestaltung aufweisen soll, andererseits aber das Herstellungsverfahren von einer dem beschriebenen Stand der Technik ähnlichen Einfachheit bleibt.

Diese Aufgabe wird erfindungsgemäß gelöst durch ein Oberflächendekor mit den kennzeichnenden Merkmalen des Hauptanspruchs in Verbindung mit den Merkmalen des Oberbegriffs des Hauptanspruchs und durch ein Verfahren mit den kennzeichnenden und den klassifizierenden Merkmalen des Anspruchs 15 sowie durch ein Gießwerkzeug mit den Merkmalen des Anspruchs 28. Vorteilhafte Ausgestaltungen und Weiterentwicklungen der Erfindung ergeben sich mit den Merkmalen der abhängigen Ansprüche.

Dadurch, dass das Oberflächendekor eine Dekoreinlage aufweist, die aus einem gegenüber der Gießhaut edleren oder zumindest sich optisch abhebenden Material bestehen kann, beispielsweise aus Leder, Stoff (textile Werkstoffe wie Gewebe, Gestricke oder Gewirke mit Kunst- und/oder Naturfasern) oder polymeren Werkstoffen wie PVC, wobei die Dekoreinlage mit einer Berandung an einen durch die Gießhaut gebildeten Bereich des Oberflächendekors angrenzt, wird zunächst eine höheren ästhetischen Ansprüchen genügende Oberflächengestaltung an einer Sichtseite eines entsprechenden Verkleidungsteils erreicht. Dadurch, dass die Berandung der Dekoreinlage von der Gießhaut umschlossen ist, dass die Berandung also von der Gießhaut so umbettet ist, dass die Gießhaut an der Berandung einen beidseitigen Kontakt mit der Dekoreinlage hat, wird dabei eine saubere und ebenfalls ästhetisch ansprechende aber auch stabile und sichere Verbindung der Dekoreinlage mit dem durch die Gießhaut gebildeten Bereich gewährleistet. Aufgrund dieser zuverlässigen Verbindung kann das beschriebene Oberflächendekor in gleicher Weise für ein Verkleidungsteil verwendet werden wie ein herkömmliches, einstückiges, nur aus einer Gießhaut bestehendes Oberflächendekor.

Das vorgeschlagene Verfahren zur Herstellung des beschriebenen Oberflächendekors sieht vor, die Dekoreinlage in ein Gießwerkzeug einzubringen, die ein Oberwerkzeug und ein Unterwerkzeug aufweist, bevor die Gießhaut durch Füllen eines zwischen Oberwerkzeug und Unterwerkzeug entstehenden Hohlraums dieses Gießwerkzeugs mit einem aushärtenden Material gegossen wird.

Dabei wird die Dekoreinlage so in das Gießwerkzeug eingebracht, dass sie im Bereich ihrer Berandung zwischen dem Oberwerkzeug und dem Unterwerkzeug eingeklemmt wird, wobei die Berandung der Dekoreinlage in den genannten Hohlraum hineinragt. Beim Gießen der Gießhaut wird diese Berandung dann von dem aushärtenden Material umschlossen, wodurch die schon beschriebene sichere Verbindung von Gießhaut und Dekoreinlage zustande kommt. In der hier gewählten Terminologie soll dabei das Unterwerkzeug eine Werkzeughälfte bezeichnen, die eine später an der Sichtseite des Verkleidungsteils sichtbare Seite des entstehenden Oberflächendekors aufnimmt, als Oberwerkzeug dementsprechend orientierungsunabhängig eine rückseitig am Oberflächendekor anliegende Werkzeughälfte des Gießwerkzeugs. Das beschriebene Herstellungsverfahren bleibt dabei trotz erheblich gesteigerter Gestaltungsmöglichkeiten ausgesprochen unkompliziert und profitiert von den Vorteilen, die eine Verwendung von Gießhäuten für Oberflächendekore mit sich bringt.

Für Ober- und Unterwerkzeug bietet sich dabei eine Herstellung aus Stahl an, in Frage kommen aber auch andere Materialien wie z.B. Aluminium. Zu beachten ist dabei, dass eine Entnahme des fertigen Oberflächendekors nicht durch Haften am Ober- oder Unterwerkzeug behindert wird, was auch durch Aufbringen einer Trennschicht auf das Ober- und/oder Unterwerkzeug hilfreich sein kann.

Um eine Kontaminierung der Dekoreinlage durch ein Übertreten des die Gießhaut bildenden Materials aus dem durch die Gießhaut gebildeten Bereich des Oberflächendekors zu verhindern, ist dort, wo die Dekoreinlage nahe ihrer Berandung zwischen den beiden Werkzeughälften eingeklemmt ist, auf eine hinreichend gute Abdichtung zwischen Oberwerkzeug, Dekoreinlage und Unterwerkzeug zu achten. Das gilt insbesondere für faserhaltige Dekoreinlagen, bei denen Kapillareffekte zu einem Aufsaugen des die Gießhaut bildenden Materials durch die Dekoreinlage führen könnten. Eine gute Abdichtung lässt sich durch eine Quetschung der Dekoreinlage an der Berandung erreichen. Eine besonders stabile Verbindung zwischen der Dekoreinlage und der Gießhaut kommt zustande, wenn die Dekoreinlage mit ihrer Berandung mindestens 1 mm, vorzugsweise mehr als 2 mm in den die entstehende Gießhaut aufnehmenden Hohlraum hineinragt, wodurch ein entsprechender Überlapp von Gießhaut und Dekoreinlage an der Berandung zustande kommt. Andererseits ist darauf zu achten, dass die Berandung nicht zu weit in den genannten Hohlraum hineinragt, um zu verhindern, dass sich die Berandung an einer Oberfläche der Gießhaut abzeichnet. Gute Ergebnisse erzielt man, wenn der Überlapp von Gießhaut und Dekoreinlage senkrecht zur Berandung nicht mehr als 5 mm, vorzugsweise höchstens 3 mm beträgt.

Als aushärtendes Ausgangsmaterial für die Gießhaut ist Polyurethan zu bevorzugen, das sich aufgrund einer anfänglich sehr geringen Viskosität sehr gut auch in enge Hohlräume mit unter Umständen unübersichtlicher Geometrie und großen Fließweglängen von z.B. bis 2500 mm füllen lässt. Ausgenutzt wird dabei ferner, dass Polyurethane nicht nur einen ihnen gegebenen Hohlraum gut ausfüllen, sondern auch exzellente Klebeeigenschaften aufweisen, was für die sichere Verbindung von Gießhaut und Dekoreinlage bei unterschiedlichsten Dekormaterialien für die Dekoreinlage von Vorteil ist.

Gute Ergebnisse mit Blick auf einen einerseits nicht zu hohen Materialaufwand und eine nicht zu harte Oberfläche und andererseits eine hinreichend hohe Stabilität der Gießhaut erzielt man, wenn die Gießhaut mit einer mittleren Dicke von zwischen 0,7 mm und 1,5 mm ausgeführt wird. Für die Dekoreinlage bieten sich aus denselben Gründen abhängig vom Dekormaterial Dicken von vorzugsweise zwischen 0,3 mm und 2 mm an.

Das Erscheinungsbild des entsprechenden Verkleidungsteils kann man zusätzlich dadurch positiv beeinflussen, dass die Gießhaut mit einer Lackschicht einer gewünschten Farbe auf einer später an der Sichtseite des fertigen Verkleidungsteils sichtbaren Oberfläche ausgeführt wird. Sofern für die Gießhaut kein lichtunempfindliches Material zu Einsatz kommt, kann eine solche vorzugsweise lichtunempfindliche und lichtundurchlässige Schicht auch als Schutz der Gießhaut gegen durch Licht verursachte Schäden dienen. Zum Aufbringen einer derartigen Oberflächenschicht kann bei der Herstellung der Gießhaut auf das Unterwerkzeug dort, wo es die entstehende Gießhaut aufnimmt, vor dem Füllen des Hohlraums und vorzugsweise auch vor dem Einbringen der Dekoreinlage in das Gießwerkzeug eine entsprechende Lackschicht aufgebracht werden, die nach dem Gießen der Gießhaut an der Gießhaut verbleibt. Damit diese Lackschicht nicht am Unterwerkzeug haften bleibt, kann vorher noch eine Trennschicht aufgebracht werden, wie die Lackschicht selbst bevorzugterweise durch Besprühen des Unterwerkzeugs. Um dabei eine Verschmutzung der Dekoreinlage zu verhindern, kann das Unterwerkzeug in einem während des Gießens die Dekoreinlage aufnehmenden Bereich durch eine Maske abgedeckt werden. Alternativ oder zusätzlich kann zur Vermeidung von Verschmutzungen der Dekoreinlage bzw. des entsprechenden Bereichs des Unterwerkzeugs das Unterwerkzeug so geteilt sein, dass der die Dekoreinlage aufnehmende Bereich einzeln absenkbar ist und zum Aufbringen der Lackschicht und/oder der Trennschicht abgesenkt wird. Eine derartige Teilung des Unterwerkzeugs in die Dekoreinlage aufnehmenden Bereich und die Gießhaut aufnehmenden Bereich, wobei letzterer absenkbar gestaltet ist, ist auch von Vorteil, um eine Verwendung ein und desselben Gießwerkzeugs für unterschiedliche und damit auch unterschiedlich dicke Dekoreinlagen zu ermöglichen.

Um bei einem späteren Hinterschäumen oder Hinterspritzen des Oberflächendekors während der Herstellung des entsprechenden Verkleidungsteils eine Beschädigung der Dekoreinlage oder eine Verschmutzung durch durchdringende Hinterschäummasse oder Hinterspritzmasse zu verhindern, insbesondere bei Verwendung von Stoffen aus Natur- und/oder Kunstfaserstoffen für die Dekoreinlage, kann die Dekoreinlage mit einer rückseitigen Sperrschicht ausgeführt werden. Dabei kann es sich z.B. um eine durch Besprühen oder Bestreichen aufgetragene Sperrschicht oder auch um eine der eigentlichen Dekoreinlage hinterlegte Folie handeln. Eine solche Schicht kann sich erübrigen, wenn die Dekoreinlage aus einem schaumundurchlässigen Material besteht.

Bei einer typischen und zweckmäßigen Ausführung der Erfindung bildet die Dekoreinlage ein ringsum von der Gießhaut eingefasstes Mittelfeld des Oberflächendekors, so dass die Dekoreinlage also längs einer geschlossenen Berandung von der Gießhaut umbettet ist. Mit einer derartigen Anordnung von Gießhaut und Dekoreinlage erreicht man eine besonders ansprechende optische Gestaltung, die insbesondere für Seitenverkleidungen, Türinnenverkleidungen oder Instrumententafeln von Kraftfahrzeugen, welche einen Innenraum eines Kraftfahrzeugs üblicherweise prägen, nutzbringend eingesetzt werden kann.

Eine besonders bevorzugte Ausgestaltung des Verfahrens zur Herstellung des Oberflächendekors sieht vor, dass das Unterwerkzeug längs einer den Hohlraum zur Dekoreinlage hin abschließenden Trennlinie einen Steg aufweist, so dass die Dekoreinlage an ihrer Berandung zwischen diesen Steg und das Oberwerkzeug eingeklemmt wird. Dabei weist das Oberwerkzeug dort vorzugsweise eine dem Steg Raum gebende Aussparung auf. Mit einem solchen Steg erreicht man zunächst eine besonders gute Abdichtung des die entstehende Gießhaut aufnehmenden Hohlraums gegen die Dekoreinlage, indem mit dem Steg ein nahe der Berandung der Dekoreinlage lokalisierter erhöhter Druck auf die Dekoreinlage ausgeübt werden kann. Auch wird damit für das optische Erscheinungsbild des fertigen Verkleidungsteils eine sehr günstige Formgebung des Oberflächendekors erreicht, bei der die von der Gießhaut umschlossene Berandung der Dekoreinlage in einer Nut versenkt ist, so dass auf der Sichtseite des Verkleidungsteils nur eine zu der Berandung parallel verlaufende, zwei Oberflächenbereiche trennende Fuge verbleibt, welche Gießhaut und Dekoreinlage optisch voneinander trennt.

Die entstehende Nut hat dabei eine durch den Steg vorgegebene Tiefe, wobei darauf zu achten ist, dass eine zu tiefe Nut das Oberflächendekor für eine Weiterbehandlung bei der Herstellung des Verkleidungsteils unhandlich macht, eine hinreichend tiefe Nut andererseits aber erwünscht ist, um einen am fertigen Verkleidungsteil sichtbaren Nutgrund zu vermeiden. Gute Ergebnisse erzielt in dieser Hinsicht mit einem Steg einer Höhe von zwischen 3 mm und 10 mm, bzw. mit einer die besagte Fuge bildenden Nut entsprechender Tiefe. Unter den gleichen ästhetischen Gesichtspunkten ist es wünschenswert, dass die Fuge einen nicht zu breiten Spalt freilässt. Der später an der Oberfläche des Verkleidungsteils zwischen Dekoreinlage und Gießhaut verbleibende Spalt sollte bei einer wie beschrieben nutförmigen Anordnung des Oberflächendekors in einem die Berandung der Dekoreinlage umgebenden Bereich eine Breite von 1,5 mm, besser noch 0,7 mm nicht überschreiten.

Besonders zu bevorzugten wäre sogar eine Ausführung, bei der der Spalt bzw. die Fuge eine verschwindende Breite hat. Dazu kann zunächst der genannte Steg am Unterwerkzeug mit einer Breite von nicht mehr als 1,5 mm ausgeführt werden. Da der Steg andererseits hinreichend stabil sein muss und die Dekoreinlage trotz des für eine gute Abdichtung nötigen hohen Drucks nicht verletzen soll, sollte der Steg aber vorzugsweise nicht schmäler als 0,7 mm sein. Eine dennoch verschwindende oder zumindest deutliche kleinere Spaltbreite am fertigen Verkleidungsteil lässt sich dadurch realisieren, dass die Fuge vor einer Weiterverarbeitung des Oberflächendekors, beispielsweise vor einem Hinterschäumen oder Hinterspritzen, durch ein entsprechendes Deformieren der Nut zusammengeschoben wird. Damit das möglich ist, kann die Dekoreinlage vor dem Gießen der Gießhaut mit einem entsprechenden Übermaß in das Gießwerkzeug eingebracht werden, was durch eine entsprechende Form des Oberwerkzeugs und/oder des Unterwerkzeugs in dem die Dekoreinlage aufnehmenden Bereich zu ermöglichen ist. Ein zum Schließen der Fuge nötiges Verformen der Nut kann auch durch Anlegen von Unterdruck in der Nut erreicht werden.

Auch das Oberwerkzeug kann so geteilt sein, dass ein die Dekoreinlage abdeckender Bereich gegenüber einem den Hohlraum für die entstehende Gießhaut abschließenden Bereich heb- und senkbar ist. Sofern das Unterwerkzeug einen Steg der beschriebenen Art aufweist, sollte dabei der heb- und senkbare Bereich des Oberwerkzeugs diesen Steg mit abdecken. Damit wird eine besonders präzise Dosierung des zur Abdichtung des Hohlraums nötigen Drucks auf die Dekoreinlage an deren Berandung möglich.

Um eine präzise Positionierung der Dekoreinlage beim Gießen der Gießhaut und damit einen wohl definierten Überlapp von Dekoreinlage und Gießhaut an der Berandung zu gewährleisten, kann die Dekoreinlage durch Unterdruck am Oberwerkzeug oder am Unterwerkzeug gehalten und fixiert werden. Eine genaue Positionierung kann auch dadurch erleichtert werden, dass das Oberwerkzeug Positionierstifte aufweist, an denen mit ihrer Berandung anliegend die Dekoreinlage beim Einbringen in das Gießwerkzeug am Oberwerkzeug angeordnet wird. Die Positionierstifte werden dazu so angeordnet, dass die Dekoreinlage vor einem Schließen des Gießwerkzeugs durch ein Aufeinanderfahren von Oberwerkzeug und Unterwerkzeug genau dann richtig positioniert ist, wenn die Berandung der Dekoreinlage an diesen Positionierstiften anliegt. Zum gleichen Zweck kann auch eine an der Berandung mit Löchern versehene Dekoreinlage verwendet werden, wobei die Löcher in der richtig positionierten Dekoreinlage Stifte aufnehmen, die dafür am Gießwerkzeug angebracht oder angeformt sein können.

Ein Verkleidungsteil mit einem Oberflächendekor der beschriebenen Art kann, wie schon erwähnt, durch Hinterspritzen des Oberflächendekors mit einem einen Träger bildenden Material oder durch Aufkaschieren des Oberflächendekors auf ein Formteil hergestellt werden, vorzuziehen mit Blick auf eine einfache Herstellung und auch angenehme haptische Eigenschaften des Verkleidungsteils ist aber eine Herstellung, bei der das Oberflächendekor hinterschäumt wird, wozu sich wieder Polyurethanmaterial als Hinterschäummasse besonders gut eignet. Durch das Hinterschäumen kann das Oberflächendekor in einfacher Weise mit einem zuvor gefertigten Träger in Verbindung gebracht werden, wobei sich als Träger für ein kostengünstiges Verkleidungsteil eine Herstellung aus Kunststoff anbietet. Besonders stabile Verkleidungsteile erhält man dabei bei einer Verwendung von gepresstem Holzfaserformstoff oder LFI-Bauteilen, auch andere faserverstärkte Kunststoffe lassen sich gut verwenden.

Bereichsweise differenzierte haptische Eigenschaften des fertigen Verkleidungsteils mit einem hinterschäumten Oberflächendekor lassen sich realisieren durch eine Ausbildung von Kammern hinter der Dekoroberfläche, die mit verschiedenen Schäumen gefüllt werden. So kann beispielsweise die Dekoreinlage mit einem anderen Schaum hinterschäumt werden als die Gießhaut.

Nicht jede beliebige Oberflächengeometrie ist mit dem beschriebenen Herstellungsverfahren darstellbar. Es zeigt sich, dass starke dreidimensionale Oberflächenkonturen zu Schwierigkeiten bei der Abdichtung und zu Faltenbildung des Oberflächendekors in Übergangsbereichen zwischen Gießhaut und Dekoreinlage führen können. Durch geringfügige Design-Anpassungen können solche Probleme allerdings eliminiert werden, beispielsweise indem ein ansonsten außerordentlich stark dreidimensional konturierter Teilbereich eines Verkleidungsteils durch Vergrößerung von Radien und Abflachung von Flächenverläufen entschärft wird. In gleicher Weise ist es möglich, durch einen Einsatz vorgeformter Dekoreinlagen derartige schwierige Bereiche ohne Änderungen beizubehalten. Damit wird jedoch ein zusätzlicher Arbeitsgang nötig. Insbesondere Mittelfelder von Türinnenverkleidungen, die üblicherweise recht plan sind und sich für eine Gestaltung mit einer Dekoreinlage der beschriebenen Art besonders gut eignen, sind in dieser Hinsicht jedoch unproblematisch. In jedem Fall ist es hilfreich, wenn das geschlossene Gießwerkzeug im Bereich der Dekoreinlage zumindest dort, wo dieser Bereich an den die Gießhaut aufnehmenden Hohlraum angrenzt, zwischen Oberwerkzeug und Unterwerkzeug nur einen Spalt einer der Dicke der Dekoreinlage entsprechenden Dicke aufweist. Dadurch wird gewährleistet, dass beim Zufahren des Gießwerkzeugs die Dekoreinlage nicht in einer sichtbaren Umgebung ihrer Berandung verzogen wird.

Ausführungsbeispiele der Erfindung werden im Folgenden anhand der Fign. 1 bis 4 beschrieben. Es zeigt
- Fig. 1: als Querschnitt einen Ausschnitt eines Gießwerkzeugs mit einem Oberflächendekor bei dessen erfindungsgemäßer Herstellung,
- Fig. 2: in gleicher Darstellung ein Oberflächendekor bei der Herstellung in einem gegenüber der Fig. 1 modifizierten Gießwerkzeug,
- Fig. 3: einen früheren Arbeitsschritt eines erfindungsgemäßen Herstellungsverfahrens mit dem Gießwerkzeug aus Fig. 2 in entsprechender Darstellung und
- Fig. 4: ebenfalls als Querschnitt einen Ausschnitt durch ein Gießwerkzeug und ein entstehendes Oberflächendekor in einer weiteren Ausführung der Erfindung.

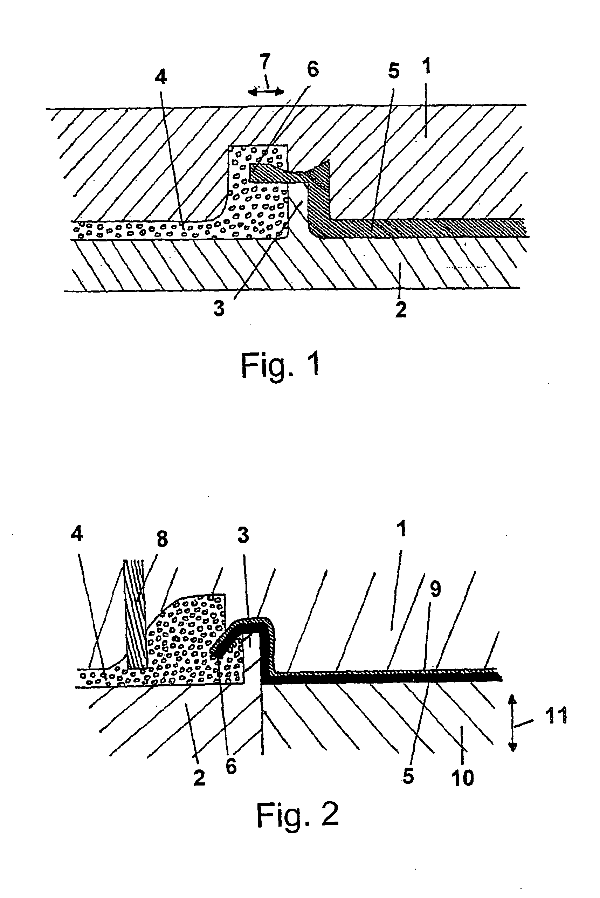

In Fig. 1 ist ein Gießwerkzeug zu sehen, das ein Oberwerkzeug 1 und ein Unterwerkzeug 2 aufweist, welche beide aus Stahl gefertigt sind. Zwei Bereiche dieses Gießwerkzeug werden durch einen Steg 3 getrennt, wobei ein in der Figur links des Steges 3 zwischen Oberwerkzeug 1 und Unterwerkzeug 2 gebildeter Hohlraum mit Polyurethan zur Bildung einer Gießhaut 4 gefüllt wird. Der andere Bereich des Gießwerkzeugs nimmt eine zuvor in das Gießwerkzeug eingebrachte Dekoreinlage 5 auf, welche aus Leder besteht und später ein Mittelfeld eines aus der Gießhaut 4 und der Dekoreinlage 5 gebildeten Oberflächendekors einer Türinnenverkleidung für ein Kraftfahrzeug bildet. Für die Dekoreinlage 5, die hier wie die Gießhaut 4 eine Dicke von ungefähr 1 mm hat, kämen auch andere Materialien wie z.B. Stoffe aus Natur- und/oder Kunstfasern oder andere polymere Flächengebilde in Frage.

Die Dekoreinlage 5 ragt mit einer Berandung 6 in den in der Figur bereits mit Polyurethan gefüllten Hohlraum zwischen Oberwerkzeug 1 und Unterwerkzeug 2, in dem sich die Gießhaut bildet, hinein, wobei die Dekoreinlage nahe dieser Berandung 6 zwischen dem Steg 3 und dem Oberwerkzeug 1 eingeklemmt ist. Die Gießhaut 4 umschließt die in den genannten Hohlraum hineinragende Berandung 6 der Dekoreinlage 5. Es besteht damit ein Oberflächendekor, das einen durch die Dekoreinlage 5 gebildeten Bereich aufweist, der an der Berandung 6 an einen durch die Gießhaut 4 gebildeten Bereich des Oberflächendekors angrenzt. Zur Bildung eines Verkleidungsteils, im Beispiel der schon genannten Türinnenverkleidung, wird dieses Oberflächendekor anschließend mit einem Polyurethanschaum hinterschäumt, und zwar durch Einschäumen einer Seite des Oberflächendekors, die in der Abbildung zum Oberwerkzeug 1 Kontakt hat. Das Unterwerkzeug 2 nimmt in der Figur dementsprechend eine Seite des entstehenden Oberflächendekors auf, welche dann eine Sichtseite des fertigen Verkleidungsteils bilden wird. Durch das Hinterschäumen wird das Oberflächendekor schließlich mit einem Träger in Verbindung gebracht, der seinerseits aus gepresstem Holzfaserformstoff besteht. Auch Träger aus anderen Materialien kämen dazu in Frage.

Durch den Steg 3, der im abgebildeten Beispiel eine Breite von ungefähr 1 mm hat, sowie durch eine entsprechende, dem Steg 3 Raum gebende Formgebung des Oberwerkzeugs 1 bildet die Dekoroberfläche in einer Umgebung der Berandung 6 eine Nut mit einer durch den Steg 3 vorgegebenen Tiefe von ungefähr 3 mm, so dass an der Sichtseite eine Fuge bzw. ein Spalt zwischen der Dekoreinlage 5 und der Gießhaut 4 verbleibt. Eine sichere Verbindung der Gießhaut 4 mit der Dekoreinlage 5 kommt dadurch zustande, dass die Gießhaut 4 und die Dekoreinlage 5 dort, wo die Dekoreinlage 5 von der Gießhaut 4 umschlossen ist, einen in der Figur durch einen Doppelpfeil 7 gekennzeichneten Überlapp von ungefähr 2,5 mm hat.

Fig. 2 zeigt eine andere Ausführung der Erfindung, die neben den schon genannten Merkmalen, die hier mit den gleichen Bezugsziffern bezeichnet sind, einige weitere Merkmale aufweist. In das Oberwerkzeug 1 eingelassen ist hier ein Positionierstift 8 zu sehen, der neben anderen, hier nicht abgebildeten Positionierstiften dazu dient, eine exakte Positionierung der Dekoreinlage 5 vor einem Schließen des Gießwerkzeugs zu erleichtern. Vor dem Schließen des Gießwerkzeugs, was durch ein Aufeinanderfahren von Oberwerkzeug 1 und Unterwerkzeug 2 geschieht, wird dazu die Dekoreinlage 5, die hier aus einem Gewebe besteht, so am Oberwerkzeug 1 angeordnet, dass die Dekoreinlage 5 mit ihrer Berandung 6 an dem Positionierstift 8 und den weiteren Positionierstiften anliegt. Die Dekoreinlage 5 wird dann beim Schließen des Gießwerkzeugs und beim Gießen der Gießhaut durch an das Oberwerkzeug 1 angelegten Unterdruck gehalten und fixiert. Das Oberwerkzeug 1 weist zu diesem Zweck kleine Öffnungen auf. Um ein Eindringen von Schaum in das Gewebe der Dekoreinlage 5 beim anschließenden Hinterschäumen zu verhindern, weist die Dekoreinlage 5 eine in der Abbildung schraffiert gezeichnete Sperrschicht 9 auf, welche im vorliegenden Ausführungsbeispiel durch eine dem Gewebe hinterlegte Folie gebildet wird. Möglich wäre zum gleichen Zweck auch eine andere Form von rückseitiger Beschichtung der Dekoreinlage 5.

Die Gießhaut 4 wird an der Sichtseite mit einer ihr eine gewünschte Farbe gebenden Lackschicht versehen. Zu diesem Zweck wird das Unterwerkzeug 2 in dem Bereich links des Steges 3 vor dem Einbringen der Dekoreinlage 5 und vor dem Schließen des Gießwerkzeugs zunächst mit einer Trennschicht und dann mit entsprechender Lackschicht versehen. Das geschieht durch Besprühen des Unterwerkzeugs 2. Um dabei eine Beschmutzung des Unterwerkzeugs 2 in dem Bereich rechts des Steges 3 zu verhindern, welche eine Verschmutzung der Dekoreinlage 5 an der Sichtseite zur Folge hätte, ist das Unterwerkzeug 2 geteilt ausgeführt, so dass ein dann die Dekoreinlage 5 aufnehmender Einsatz 10 des Unterwerkzeugs 2 in eine durch einen Doppelpfeil 11 angedeutete Richtung abgesenkt bzw. wieder angehoben werden kann. Ein Absenken dieses Einsatzes 10 verringert das Risiko einer Beschmutzung des entsprechenden Bereichs des Unterwerkzeugs 2 beim Besprühen mit Lack. Der bewegliche Einsatz 10 erlaubt auch eine vielseitige Verwendung des abgebildeten Gießwerkzeugs für Dekoreinlagen 5 unterschiedlicher Dicke und/oder Materialien. Bei einer anschließenden Entnahme des Oberflächendekors aus dem Gießwerkzeug verbleibt die zunächst auf das Unterwerkzeug 2 aufgebrachte Lackschicht dann an der Gießhaut 4.

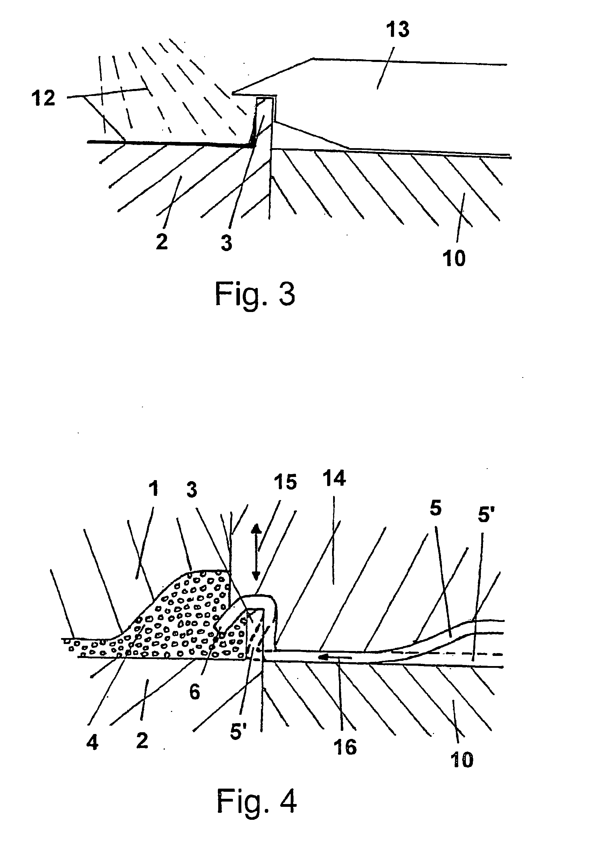

In Fig. 3 ist ein früherer Arbeitsschritt eines Herstellungsverfahrens mit dem Gießwerkzeug aus Fig. 2 zu sehen, bei dem wiederkehrende Merkmale wieder mit den gleichen Bezugszeichen versehen sind. Das Unterwerkzeug 2 wird im abgebildeten Arbeitsschritt mit Lack 12 besprüht, wobei der später die Dekoreinlage aufnehmende Bereich des Unterwerkzeugs 2 hier abweichende zum zuvor beschriebenen Vorgehen nicht durch Absenken des Einsatzes 10 sondern durch eine Abdeckung mit einer Maske 13 geschützt wird. Möglich wäre auch eine Abdeckung mit der Maske 13 in Verbindung mit einem Absenken des Einsatzes 10 des Unterwerkzeugs 2.

Eine weitere Variante eines erfindungsgemäßen Herstellungsverfahrens für ein Oberflächendekor ist in der Fig. 4 abgebildet. Auch hier sind das Gießwerkzeug und das entstehende Oberflächendekor im Querschnitt gezeigt, gleiche Merkmale sind wieder mit identischen Bezugszeichen versehen. Abweichend von den zuvor beschriebenen Beispielen ist hier auch das Oberwerkzeug 1 geteilt ausgeführt mit einem die Dekoreinlage 5 abdeckenden Mittelteil 14, das in eine durch einen Doppelpfeil 15 veranschaulichte Richtung heb- und senkbar ausgeführt. Dadurch kann ein gezielter dosierbarer, auf verschiedene Dekoreinlagen einstellbarer Druck auf die Dekoreinlage 5 ausgeübt werden, dort wo diese an der Berandung 6 auf dem Steg 3 aufliegt. Das Mittelteil 14 des Oberwerkzeugs 1 ist darüber hinaus so geformt, dass es ein Einbringen der Dekoreinlage 5 in das Gießwerkzeug mit einem Übermaß erlaubt. Das hat zur Folge, dass nach einer anschließenden Entnahme des Oberflächendekors aus dem Gießwerkzeug und vor dem Hinterschäumen zur Bildung des Verkleidungsteils die Dekoreinlage 5 durch ein leichtes Deformieren der durch den Steg 3 verursachten Nut gestreckt werden kann, wodurch die durch die Nut an der Sichtseite des Oberflächendekors gebildete Füge geschlossen wird. Diese Fuge, die sonst einen Spalt einer Breite von etwa 1 mm offen ließe, hat dadurch am fertigen Verkleidungsteil eine verschwindende Breite. Ein Pfeil 16 in der Figur deutet an, in welche Richtung die Dekoreinlage 5 zum Schließen der Fuge verschoben wird, wodurch die Dekoreinlage 5 in eine in der Figur gestrichelt gezeichnete Schäumposition 5' gelangt.

## Patentansprüche

1. Oberflächendekor für ein Verkleidungsteil, insbesondere für ein Innenverkleidungsteil für ein Kraftfahrzeug, das bereichsweise durch eine Gießhaut gebildet ist,
**dadurch gekennzeichnet,**
**dass** das Oberflächendekor einen ausschließlich durch eine Dekoreinlage (5) gebildeten Bereich aufweist, die mit einer Berandung (6) an einen durch die Gießhaut (4) gebildeten Bereich des Oberflächendekors angrenzt, wobei die Berandung (6) der Dekoreinlage (5) von der Gießhaut (4) umschlossen ist.

2. Oberflächendekor nach Anspruch 1, **dadurch gekennzeichnet, dass** die Gießhaut (4) aus Polyurethan besteht und/oder vorzugsweise eine mittlere Dicke von zwischen 0,7 mm und 1,5 mm hat.

3. Oberflächendekor nach einem der Ansprüche 1 oder 2, **dadurch gekennzeichnet, dass** die Gießhaut (4) an einer eine Sichtseite bildenden Oberfläche eine Lackschicht und/oder eine lichtunempfindliche Schicht trägt oder aus einem lichtunempfindlichen Material besteht.

4. Oberflächendekor nach einem der Ansprüche 1 bis 3, **dadurch gekennzeichnet, dass** die Dekoreinlage (5) aus Leder, textilem Werkstoff oder polymerem Werkstoff besteht und/oder eine Dicke von zwischen 0,3 mm und 2 mm hat.

5. Oberflächendekor nach einem der Ansprüche 1 bis 4, **dadurch gekennzeichnet, dass** die Dekoreinlage (5) rückseitig eine Sperrschicht (9) aufweist oder selbst schaumdichten Charakter hat.

6. Oberflächendekor nach einem der Ansprüche 1 bis 5, **dadurch gekennzeichnet, dass** die von der Gießhaut eingefasste Berandung (6) der Dekoreinlage (5) in sich geschlossen ist.

7. Oberflächendekor nach einem der Ansprüche 1 bis 6, **dadurch gekennzeichnet, dass** ein die Berandung (6) umgebender Bereich des Oberflächendekors eine auf einer Sichtseite des Oberflächendekors längs der Berandung (6) verlaufende Nut bildet, so dass die von der Gießhaut (4) umschlossene Berandung (6) der Dekoreinlage (5) in der Nut versenkt liegt und auf der Sichtseite des Oberflächendekors eine an der Berandung (6) parallel verlaufende, zwei Oberflächenbereiche trennende Fuge verbleibt, wobei der eine Oberflächenbereich durch die Gießhaut (4), der andere durch die Dekoreinlage (5) gebildet ist.

8. Oberflächendekor nach Anspruch 7, **dadurch gekennzeichnet, dass** die Fuge eine Breite von höchstens 1,5 mm, vorzugsweise eine Breite von nicht mehr als 0,7 mm hat.

9. Oberflächendekor nach einem der Ansprüche 1 bis 8, **dadurch gekennzeichnet, dass** die Gießhaut (4) und die Dekoreinlage (5) senkrecht zur Berandung (6) einen Überlapp von zwischen 1 mm und 5 mm, vorzugsweise zwischen 2 mm und 3 mm haben.

10. Verkleidungsteil, insbesondere Innenverkleidungsteil für ein Kraftfahrzeug, das ein Oberflächendekor nach einem der Ansprüche 1 bis 9 aufweist.

11. Verkleidungsteil nach Anspruch 10, **dadurch gekennzeichnet, dass** es eine Seitenverkleidung, Türinnenverkleidung oder Bestandteil einer Instrumententafel ist.

12. Verkleidungsteil nach einem der Ansprüche 10 oder 11, **dadurch gekennzeichnet, dass** das Oberflächendekor hinterschäumt ist, vorzugsweise mit einem Polyurethanmaterial als Hinterschäummasse.

13. Verkleidungsteil nach einem der Ansprüche 10 bis 12, **dadurch gekennzeichnet, dass** es einen Träger aufweist, der vorzugsweise aus Kunststoff, besonders vorzugsweise aus gepresstem Holzfaserformstoff gefertigt ist.

14. Verkleidungsteil nach einem der Ansprüche 10 bis 13, sofern diese sich auf Anspruch 7 beziehen, **dadurch gekennzeichnet, dass** die Fuge an der Sichtseite eine verschwindende Breite hat.

15. Verfahren zur Herstellung eines Oberflächendekors für ein Verkleidungsteil, insbesondere für ein Innenverkleidungsteil für ein Kraftfahrzeug, bei dem ein zwischen einem Oberwerkzeug und einem Unterwerkzeug eines Gießwerkzeugs gebildeter Hohlraum zur Bildung einer Gießhaut mit einem aushärtenden Material gefüllt wird, **dadurch gekennzeichnet, dass** zuvor eine Dekoreinlage (5) in das Gießwerkzeug eingebracht und im Bereich der Berandung so zwischen dem Oberwerkzeug (1) und dem Unterwerkzeug (7) eingeklemmt wird, dass eine Berandung (6) der Dekoreinlage (5) in den genannten Hohlraum hineinragt und beim Füllen des Hohlraums von dem aushärtenden Material umschlossen wird.

16. Verfahren nach Anspruch 15, **dadurch gekennzeichnet, dass** als aushärtendes Material Polyurethan verwendet wird, wobei die daraus entstehende Gießhaut (4) vorzugsweise eine mittlere Dicke von zwischen 0,7 mm und 1,5 mm erhält.

17. Verfahren nach einem der Ansprüche 15 oder 16, **dadurch gekennzeichnet, dass** auf einen die entstehende Gießhaut (4) aufnehmenden Oberflächenbereich des Unterwerkzeugs (2) vor dem Füllen des Hohlraums eine später an der Gießhaut (4) verbleibende Lackschicht aufgebracht wird, vorzugsweise durch Besprühen, wobei besonders vorzugsweise ein die Dekoreinlage (5) aufnehmender Bereich des Unterwerkzeugs (2) durch eine Maske (13) abgedeckt wird.

18. Verfahren nach einem der Ansprüche 15 bis 17, **dadurch gekennzeichnet, dass** das Unterwerkzeug (2) so geteilt ist, dass ein die Dekoreinlage (5) aufnehmender Bereich gegenüber einem die entstehende Gießhaut (4) aufnehmenden Bereich des Unterwerkzeugs (2) absenkbar ist.

19. Verfahren nach einem der Ansprüche 15 bis 18, **dadurch gekennzeichnet, dass** das Unterwerkzeug (2) längs einer den Hohlraum zur Dekoreinlage (5) hin abschließenden Trennlinie einen Steg (3) aufweist und die Dekoreinlage (5) an ihrer Berandung (6) zwischen diesem Steg (3) und dem Oberwerkzeug (1) eingeklemmt wird, wobei das Oberwerkzeug (1) dort vorzugsweise eine dem Steg (3) Raum gebende Aussparung aufweist.

20. Verfahren nach Anspruch 19, **dadurch gekennzeichnet, dass** der Steg (3) eine Breite von zwischen 0,7 mm und 1,5 mm und/oder eine Höhe von zwischen 3 mm und 10 mm hat.

21. Verfahren nach einem der Ansprüche 15 bis 20, **dadurch gekennzeichnet, dass** das Oberwerkzeug (1) so geteilt ist, dass ein die Dekoreinlage (5) abdeckender Bereich gegenüber einem den Hohlraum für die entstehende Gießhaut (4) abschließenden Bereich heb- und senkbar ist.

22. Verfahren nach einem der Ansprüche 15 bis 21, **dadurch gekennzeichnet, dass** die Dekoreinlage (5) durch Unterdruck am Oberwerkzeug (1) oder am Unterwerkzeug (2) gehalten wird.

23. Verfahren nach einem der Ansprüche 15 bis 22, **dadurch gekennzeichnet, dass** das Oberwerkzeug (1) Positionierstifte (8) aufweist, wobei die Dekoreinlage (5) beim Einbringen in das Gießwerkzeug mit ihrer Berandüng (6) an den Positionierstiften (8) anliegend am Oberwerkzeug (1) angeordnet wird.

24. Verfahren nach einem der Ansprüche 15 bis 23, **dadurch gekennzeichnet, dass** die Dekoreinlage (5) ein ringsum von der Gießhaut (4) eingefasstes Mittelfeld des Oberflächendekors bildet.

25. Verfahren nach einem der Ansprüche 15 bis 24, **dadurch gekennzeichnet, dass** als Material für die Dekoreinlage (5) Leder, textiler Werkstoff oder polymerer Werkstoff zum Einsatz kommt.

26. Verfahren nach einem der Ansprüche 15 bis 25, **dadurch gekennzeichnet, dass** die Dekoreinlage (5) rückseitig beschichtet oder mit einer Folie oder einer anderen Sperrschicht (9) hinterlegt wird oder selbst aus einem schaumdichten Material besteht.

27. Verfahren nach einem der Ansprüche 19 bis 26, **dadurch gekennzeichnet, dass** eine durch den Steg (3) verursachte Fuge, welche das Oberflächendekor zwischen einem durch die Gießhaut (4) und einem durch die Dekoreinlage (5) gebildeten Bereich aufweist, nach einer Entnahme des Oberflächendekors aus dem Gießwerkzeug auf eine verschwindende Spaltbreite zusammengeschoben wird.

28. Gießwerkzeug zur Herstellung eines Oberflächendekors für ein Verkleidungsteil mit einem Oberwerkzeug und einem Unterwerkzeug, zwischen denen das Gießwerkzeug in geschlossenem Zustand einen Hohlraum zum Gießen einer Gießhaut aufweist, wobei das Gießwerkzeug durch Auseinander- und Zusammenführen von Oberwerkzeug und Unterwerkzeug geöffnet und geschlossen werden kann, **dadurch gekennzeichnet, dass** das Gießwerkzeug einen ersten und einen zweiten Bereich aufweist, von denen der erste Bereich den Hohlraum zum Gießen der Gießhaut (4) bildet, während der zweite Bereich zwischen Oberwerkzeug (1) und Unterwerkzeug (2) einen Raum zum Einlegen einer Dekoreinlage (5) frei lässt und längs einer Begrenzung an den ersten Bereich angrenzt, wobei das Gießwerkzeug längs dieser Begrenzung einen zwischen Oberwerkzeug (1) und Unterwerkzeug (2) gebildeten Dichtungsspalt zum Einklemmen einer Berandung (6) der Dekoreinlage (5) aufweist, wobei sich das Gießwerkzeug ferner an dem Dichtungsspalt zum genannten Hohlraum hin so aufweitet, dass eine nicht zu weit in den Hohlraum hineinragende Berandung (6) der Dekoreinlage (5) nur an Rändern des Dichtungsspalts, nicht aber an Wänden des Hohlraums, anliegt.

29. Gießwerkzeug nach Anspruch 28, **dadurch gekennzeichnet, dass** das Unterwerkzeug längs der Begrenzung einen Steg (3) aufweist, der den Hohlraum begrenzt und eine Berandung des Dichtungsspalts bildet.

30. Gießwerkzeug nach einem der Ansprüche 28 oder 29, **dadurch gekennzeichnet, dass** die Begrenzung eine geschlossene Umrandung des zweiten Bereichs bildet.

31. Gießwerkzeug nach einem der Ansprüche 28 bis 30, **dadurch gekennzeichnet, dass** das Unterwerkzeug (2) und/oder das Oberwerkzeug (1) so geteilt ist, dass der zweite Bereich unabhängig vom ersten Bereich auseinander und aufeinander fahrbar ist.

32. Gießwerkzeug nach einem der Ansprüche 28 bis 31, **dadurch gekennzeichnet, dass** das Oberwerkzeug (1) oder das Unterwerkzeug (2) im zweiten Bereich Öffnungen zum Anlegen von Unterdruck aufweist an einer dem jeweils anderen Werkzeug zugewandten Seite.

33. Gießwerkzeug nach einem der Ansprüche 28 bis 32, **dadurch gekennzeichnet, dass** das Oberwerkzeug (1) und/oder das Unterwerkzeug (2) zumindest teilweise aus Stahl oder Aluminium gefertigt ist.

## Claims

1. Surface decor for a trim part, particularly for an inner trim part of a vehicle which is partly formed by a cast skin,
**characterised in that**
the surface decor has an area exclusively formed by a decor insert (5) which, with one edge (6), adjoins to an area of the surface decor formed by the cast skin (4), with the edge (6) of the decor insert (5) being enclosed by the cast skin (4).

2. Surface decor according to claim 1, **characterised in that** the cast skin (4) consists of polyurethane and/or preferably has an average thickness of 0.7 mm to 1.5 mm.

3. Surface decor according to claim 1 or 2, **characterised in that** the cast skin (4) has a varnish layer on a visible side of the surface and/or has a layer that is insensitive to light or consists of a material that is insensitive to light.

4. Surface decor according to one of the claims 1 to 3, **characterised in that** the decor insert (5) consists of leather, a textile material or a polymer material and/or has a thickness of 0.3 mm to 2 mm.

5. Surface decor according to one of the claims 1 to 4, **characterised in that** the decor insert (5) has got a barrier layer (9) on the back or has foam-tight character by itself.

6. Surface decor according to one of the claims 1 to 5, **characterised in that** the edge (6) of the decor insert (5) enclosed by the cast skin is closed.

7. Surface decor according to one of the claims 1 to 6, **characterised in that** an area of the surface decor that encloses the edge (6) forms a groove that runs along the edge (6) on a visible side of the surface decor in a way that the edge (6) of the decor insert (5) enclosed by the cast skin (4) is counter-sunk in the groove and that a joint that runs parallel to the edge (6), separating two surface areas on the visible side of the surface decor, remains.

8. Surface decor according to claim 7, **characterised in that** the joint has a maximum width of 1.5mm, preferably no more than 0.7mm.

9. Surface decor according to one of the claims 1 to 8, **characterised in that** the cast skin (4) and the decor insert (5) overlap by 1 mm to 5 mm, preferably 2 mm to 3 mm perpendicularly to the edge (6).

10. Trim part, particularly inner trim part for a vehicle that has a surface decor according to one of the claims 1 to 9.

11. Trim part according to claim 10, **characterised in that** it is a side panel, inner door panel or part of an instrument panel.

12. Trim part according to claim 10 or 11, **characterised in that** the surface decor is foam-backed, preferably with a polyurethane material as foam-backing material.

13. Trim part according to one of the claims 10 to 12, **characterised in that** is has a carrier which is preferably made of plastics, particularly preferably of a pressed wood fibre form material.

14. Trim part according to one of the claims 10 to 13, if they refer to claim 7, **characterised in that** the joint has got a width close to zero on the visible side.

15. Procedure for the production of a surface decor for a trim part, particular an inner trim part for a vehicle, at which a cavity formed between the upper tool and the lower tool of a cast tool is filled with a hardening material in order to form a cast skin, **characterised in that** first a decor insert (5) is inserted into the cast tool and clamped between the upper tool (1) and the lower tool (7) in the area of the edge in a way that one edge (6) of the decor insert (5) reaches into the mentioned cavity and is enclosed by the hardening material when the cavity is filled.

16. Procedure according to claim 15, **characterised in that** the hardening material used is polyurethane, with the resulting cast skin having a preferable average thickness of 0.7 mm to 1.5 mm.

17. Procedure according to claim 15 or 16, **characterised in that**, before the cavity is filled, a varnish layer that later remains on the cast skin (4) is applied on a surface area of the lower tool (2) taking up the resulting cast skin (4). This is preferably done by spraying, with the area of the lower tool (2) that takes up the decor insert (5) being preferably in particular covered by a mask (13).

18. Procedure according to one of the claims 15 to 17, **characterised in that** the lower tool (2) is divided in a way that an area that takes up the decor insert (5) can be lowered in relation to an area of the lower tool (2) that takes up the resulting cast skin (4).

19. Procedure according to one of the claims 15 to 18, **characterised in that** the lower tool (2) has a bar (3) along a separation line that cuts off the cavity towards the decor insert (5) and that the decor insert (5) is clamped between this bar (3) and the upper tool (1) at its edge, with the upper tool (1) preferably having a recess to give space to the bar.

20. Procedure according to claim 19, **characterised in that** the bar (3) is 0.7 mm to 1.5 mm wide and/or 3 mm to 10 mm high.

21. Procedure according to one of the claims 15 to 20, **characterised in that** the upper tool (1) is divided in a way that an area that covers the decor insert (5) can be lifted und lowered in relation to an area that cuts off the cavity for the resulting cast skin (4).

22. Procedure according to one of the claims 15 to 21, **characterised in that** the decor insert (5) is pressed against the upper tool (1) or the lower tool (2) through negative pressure.

23. Procedure according to one of the claims 15 to 22, **characterised in that** the upper tool (1) has locating pins (8), with the decor insert (5) being positioned in the upper tool (1) in a way that the edge (6) of the decor insert adjoins the locating pins (8) when it is placed in the cast tool.

24. Procedure according to one of the claims 15 to 23, **characterised in that** the decor insert (5) forms the centre part of a surface decor that is circumferentially enclosed by the cast skin (4).

25. Procedure according to one of the claims 15 to 24, **characterised in that** leather, textile material or polymer material is used for the decor insert (5).

26. Procedure according to one of the claims 15 to 25, **characterised in that** the decor insert (5) is coated on the backside or backed by a foil or another barrier layer (9) or consists of a foam-tight material by itself.

27. Procedure according to one of the claims 15 to 26, **characterised in that** a groove resulting from the bar (3) between an area formed by the cast skin (4) and an area formed by the decor insert (5) on the surface decor is minimized to a gap width close to zero after that the surface decor is extracted from the cast skin.

28. Cast tool for the production of a surface decor for a trim part with an upper tool and a lower tool, between which a cavity for the casting of a cast skin is formed by the cast tool when it is closed. The cast skin can be opened and closed by bringing together and separating the upper tool and the lower tool. It is **characterised in that** the cast tool has got a first and a second area out of which the first area forms the cavity for the casting of the cast skin (4), while the second area between the upper tool (1) and the lower tool (2) leaves space for the placing of a decor insert (5) and adjoins the first area along a boundary line, with the cast tool having a sealing gap for the clamping of the edge (6) of a decor insert (5) that is formed between the upper tool (1) and the lower tool (2) along this boundary line, with the cast tool furthermore widening at the sealing gap to the mentioned cavity in a way that the edge (6) of the decor insert (5) reaching not too far into the cavity only adjoins the edges of the sealing gap, but not the walls of the cavity.

29. Cast tool according to claim 28, **characterised in that** the lower tool has a bar (3) along the limitation which limits the cavity and forms the edge of the sealing gap.

30. Cast tool according to claim 28 or 29, **characterised in that** the limitation forms a closed edge of the second area.

31. Cast tool according to one of the claims 28 to 30, **characterised in that** the lower tool (2) and/or the upper tool (1) is divided in a way that the second area can be driven apart or towards one another irrespective of the first area.

32. Cast tool according to one of the claims 28 to 31, **characterised in that** the upper tool (1) or the lower tool (2) has got openings for the application of negative pressure respectively on the side that faces the other tool.

33. Cast tool according to one of the claims 28 to 32, **characterised in that** the upper tool (1) and/or the lower tool (2) is at least partly made of steel or aluminium.

## Revendications

1. Décor de surface pour un élément d'habillage, particulièrement pour un élément d'habillage intérieur pour un véhicule automobile qui est partiellement formé d'un peau coulé, **caractérisé en ce que** le décor de surface comprend une étendue qui est exclusivement formée par un insert de décoration (5) et qui est adjacent à une étendue du décor de surface qui est formé du peau coulé (4) avec une bordure (6), dont la bordure (6) de l'insert de décoration (5) est enserrée par le peau coulé (4).

2. Décor de surface selon la revendication 1, **caractérisé en ce que** le peau coulé (4) se compose de polyuréthane et/ou a de préférence une épaisseur moyenne d'entre 0,7 mm et 1,5 mm.

3. Décor de surface selon la revendication 1 ou 2, **caractérisé en ce que** le peau coulé (4) a un stratifié de verni sur une surface qui forme un côté visible et/ou un stratifié insensible au lumière ou consiste en un matériau insensible au lumière.

4. Décor de surface selon une des revendications 1 à 3, **caractérisé en ce que** l'insert de décoration (5) consiste de cuir, matériau textile ou matériau polymère et/ou a une épaisseur d'entre 0,3 mm et 2 mm.

5. Décor de surface selon une des revendications 1 à 4, **caractérisé en ce que** l'insert de décoration (5) a une couche de jonction (9) au verso ou est composé d'un matériau qui colmate contre la mousse lui-même.

6. Décor de surface selon une des revendications 1 à 5, **caractérisé en ce que** la bordure (6) de l'insert de décoration (5) enserrée par le peau coulé est close.

7. Décor de surface selon une des revendications 1 à 6, **caractérisé en ce qu'**une étendue du décor de surface qui enserre la bordure (6) forme une rainure au côté visible du décor de surface le long de la bordure (6), de sorte que la bordure (6) du décor de surface (5) enserrée par le peau coulé (4) se trouve enfoncée dans la rainure et que reste une jointure au côté visible du décor de surface qui est parallèle au bordure (6) et qui sépare deux étendues de surface. L'un des étendues de surface est formée par le peau coulé (4), l'autre par l'insert de décoration (5).

8. Décor de surface selon la revendication 7, **caractérisé en ce que** la jointure est au maximum 1,5 mm large et, de préférence, n'est pas plus large que 0,7 mm.

9. Décor de surface selon une des revendications 1 à 8, **caractérisé en ce que** le peau coulé (4) et l'insert de décoration (5) chevauchent sur 1 mm à 5 mm, de préférence sur 2 mm à 3 mm, verticalement à la bordure.

10. Elément d'habillage, particulièrement élément d'habillage intérieur pour un véhicule automobile qui a un décor de surface selon une des revendications 1 à 9.

11. Elément d'habillage selon la revendication 10, **caractérisé en ce qu'**il s'agit d'un panneau latéral, un panneau de porte ou une partie de la planche de bord.

12. Elément d'habillage selon la revendication 10 ou 11, **caractérisé en ce que** le décor de surface est surmoulé par moussage, de préférence avec polyuréthane comme matériau de surmoulage par moussage.

13. Elément d'habillage selon une des revendications 10 à 12, **caractérisé en ce qu'**il comprend une potence qui, de préférence, est fabriquée de plastique, particulièrement de préférence de matériau moulé de fibre de bois pressé.

14. Elément d'habillage selon une des revendications 10 a 12, si font référence à la revendication 7, **caractérisé en ce que** la jointure a une largeur négligeable.

15. Procédure pour la production d'un décor de surface pour un élément d'habillage, particulièrement pour un élément d'habillage intérieur pour un véhicule automobile. Dans cette procédure, une cavité entre l'outil supérieur et l'outil inférieur d'un outil de moulage est remplie avec un matériau durcissant afin de former un peu coulé, **caractérisé en ce que**, d'abord, un insert de décoration (5) est mis dans l'outil de moulage et coincé dans l'étendue de la bordure entre l'outil supérieur (1) et l'outil inférieur (7) de façon qu'une bordure (6) de l'insert de décoration (5) avance dans la cavité précitée et est enserrée par le matériau durcissant quand la cavité est remplie.

16. Procédure selon la revendication 15, **caractérise en ce que** polyuréthane est utilisé comme matériau durcissant. Le peau coulé résultant (4) aura, de préférence, une largeur moyenne d'entre 0,7 mm et 1,5 mm.

17. Procédure selon la revendication 15 ou 16, **caractérise en ce qu'**un stratifié de verni, qui reste plus tard sur le peau coulé (4), est appliqué sur l'étendue d'une surface de l'outil inférieur (2) qui reçoit le peau coulé (4) résultant avant que la cavité soit remplie, de préférence par vaporisation. L'étendue de l'outil inférieur (2) qui reçoit l'insert de décoration (5) est, de préférence, couverte par une masque (13).

18. Procédure selon une des revendications 15 à 17, **caractérisé en ce que** l'outil inférieur (2) est partagé de façon que l'étendue qui reçoit l'insert de décoration (5) peut être baissée par rapport à l'étendue de l'outil inférieur (2) qui reçoit le peau coulé (4) résultant.

19. Procédure selon une des revendications 15 à 18, **caractérisé en ce que** l'outil inférieur (2) a une traverse (3) le longe d'une ligne de démarcation qui ferme la cavité et l'insert de décoration (5) et que l'insert de décoration (5) est coincé à sa bordure (6) entre cette traverse (3) et l'outil supérieur (1). L'outil supérieur (1) y a un évidement, qui donne espace au traverse (3).

20. Procédure selon la revendication 19, **caractérisé en ce que** la traverse (3) a une largeur d'entre 0,7 mm et 1,5 mm et/ou une hauteur d'entre 3 mm et 10 mm.

21. Procédure selon une des revendications 15 à 20, **caractérisé en ce que** l'outil supérieur (1) est partagé de façon qu'une étendue qui couvre l'insert de décoration (5) peut être élevée et baissée par rapport à une étendue qui ferme la cavité pour le peau coulé (4) résultant.

22. Procédure selon une des revendications 15 à 21, **caractérisé en ce que** l'insert de décoration (5) est tenu à l'outil supérieur (1) ou l'outil inférieur par dépressuration.

23. Procédure selon une des revendications 15 à 22, **caractérisé en ce que** l'outil supérieur (1) a goupilles de positionnement (8). Quand l'insert de décoration (5) est mis dans l'outil de moulage, il est placé dans l'outil supérieur avec sa bordure (6) touchant l'outil supérieur.

24. Procédure selon une des revendications 15 à 23, **caractérisé en ce que** l'insert de décoration (5) forme une partie centrale du décor de surface qui est de tous côtés enserré par le peau coulé (4).

25. Procédure selon une des revendications 15 à 24, **caractérisé en ce qu'**on applique cuir, un matériau textile ou matériau polymère pour l'insert de décoration (5).

26. Procédure selon une des revendications 15 à 25, **caractérisé en ce que** l'insert de décoration (5) est affiché du revers ou soutenu par une feuille ou un autre couche de jonction (9) ou consiste lui-même d'un matériau qui colmate contre la mousse.

27. Procédure selon une des revendications 15 à 26, **caractérisé en ce que** la jointure, qui est engendrée par la traverse (3) que caractérise le décor de surface entre une étendue formée par le peau coulé (4) et une étendue formée par l'insert de décoration, est rapprochée à un largeur fonte négligeable quand le décor de surface est extrait de l'outil de moulage.

28. Outil de moulage pour la production d'un décor de surface pour un élément d'habillage avec un outil supérieur et un outil inférieur, entre lesquelles l'outil de moulage a une cavité pour le moulage d'un peau coulé quand il est fermé, dont l'outil de moulage est ouvert et fermé en séparant et réunissant l'outil supérieur et l'outil inférieur, **caractérisé en ce que** l'outil de moulage a une première et une deuxième étendue, dont la première étendue forme la cavité pour le moulage du peau coulé (4), tandis que la seconde étendue laisse un espace pour mettre un insert de décoration (5) entre l'outil supérieur (1) et l'outil inférieur et est adjacent au première étendue au long d'une frontière, dont l'outil de moulage a une fente de colmatage pour coincer d'une bordure (6) de l'insert de décoration (5) au long de cette frontière qui se forme entre l'outil supérieur et l'outil inférieur, dont l'outil de moulage s'élargie à la fente de colmatage à la cavité précitée de façon qu'une bordure (6) de l'insert de décoration (5) qui n'avance à la cavité très loin touche les bords de la fente de colmatage, mais pas aux cloisons de la cavité.

29. Outil de moulage selon la revendication 28, **caractérisé en ce que** l'outil inférieur a une traverse (3) au long de la frontière qui termine la cavité et forme une bordure de la fente de colmatage.

30. Outil de moulage selon la revendication 28 ou 29, **caractérisé en ce que** la frontière forme une bordure close de la deuxième étendue.

31. Outil de moulage selon une des revendications 28 à 30, **caractérisé en ce que** l'outil inférieur (2) et/ou l'outil supérieur (1) est partagé de façon que la deuxième étendue peut être séparée et réunit indépendamment de la première étendue.

32. Outil de moulage selon une des revendications 28 à 31, **caractérisé en ce que** l'outil supérieur (1) ou l'outil inférieur (2) a mortaises dans la deuxième étendue afin de raccorder dépressuration à un côté qui est respectivement tourné vers proche de l'autre outil.

33. Outil de moulage selon une des revendications 28 à 32, **caractérisé en ce que** l'outil supérieur (1) et/ou l'outil inférieur (2) est fabriqué au moins partiellement d'acier ou d'aluminium.
